Europäisches Patentamt

European Patent Office

Office européen des brevets

(19)

(11) Numéro de publication : **0 085 585**
**B1**

(12) **FASCICULE DE BREVET EUROPÉEN**

(45) Date de publication du fascicule du brevet :
16.04.86

(51) Int. Cl.⁴ : $G\ 02\ B\quad 6/18$, $C\ 03\ C\ 13/00$

(21) Numéro de dépôt : 83400033.3

(22) Date de dépôt : 06.01.83

(54) **Fibre optique multimode à grande bande passante.**

(30) Priorité : 08.01.82 FR 8200178

(43) Date de publication de la demande :
10.08.83 Bulletin 83/32

(45) Mention de la délivrance du brevet :
16.04.86 Bulletin 86/16

(84) Etats contractants désignés :
DE FR GB NL

(56) Documents cités :
EP-A- 0 046 281
EP-A- 0 054 495
DE-A- 2 358 880
DE-A- 2 627 821
FR-A- 2 394 100
PATENTS ABSTRACTS OF JAPAN, vol. 4, no. 39(P-4)(521), 28 mars 1980, pages 159 P 4;

(73) Titulaire : **QUARTZ ET SILICE**
**"Les Miroirs" 18 avenue d'Alsace**
**F-92400 Courbevoie (FR)**

(72) Inventeur : **Aldebert, Pierre**
**19 rue d'Issy**
**F-92170 Vanves (FR)**

(74) Mandataire : **Breton, Jean-Claude et al**
**SAINT-GOBAIN RECHERCHE 39, quai Lucien Lefranc**
**F-93300 Aubervilliers Cedex (FR)**

EP 0 085 585 B1

Jouve, 18, rue St-Denis, 75001 Paris, France

**Description**

La présente invention concerne les systèmes de transmission à fibres optiques et, plus particulièrement, des fibres optiques multimodes à faible atténuation et à faible dispersion.

Il est connu d'utiliser des fibres optiques dites « à saut d'indice » comprenant une zone centrale ou âme, entourée d'une couche concentrique d'indice de réfraction inférieur. Les signaux optiques se propagent dans l'âme d'un bout à l'autre de la fibre grâce aux multiples réflexions totales qu'ils subissent à l'interface de l'âme et de la couche externe.

Ces fibres, généralement en verres de silice de très grande pureté, présentent de ce fait une très faible atténuation du signal optique transmis ; malheureusement elles sont à l'origine d'une déformation non négligeable dudit signal.

En effet, dans le cas d'une fibre à modes multiples, les signaux d'entrée envoyés au temps $t_1$ vont suivre des parcours différents, ce qui, dans un milieu d'indice constant, va se traduire à la sortie par des signaux échelonnés sur une durée $t_2$, $t_2 + \Delta t$.

Cette dispersion temporelle limite le nombre d'informations susceptibles d'être transmises par unité de temps. Cette propriété définit ce que l'on appelle la bande passante, qui, pour ce type de fibre, ne dépasse pas quelques dizaines de mégahertz.kilomètre.

Pour atténuer cet inconvénient, il est connu d'utiliser des fibres optiques dont l'indice de réfraction décroît selon une loi parabolique, depuis l'axe jusqu'à la périphérie. En principe, un tel profil d'indice de réfraction permet aux signaux de se propager à des vitesses différentes selon leur mode de parcours, ce qui a pour effet d'éliminer la dispersion temporelle et donc de fournir des bandes passantes théoriquement infinies ; en pratique la dispersion n'est pas nulle mais les bandes réellement obtenues sont généralement supérieures à 4 à 500 MHz.km et peuvent même dépasser le gigahertz.km.

Ces deux catégories de fibres se distinguent également au plan économique : les fibres à saut d'indice sont obtenues à partir de préformes fabriquées à des coûts relativement modérés, alors que les fibres à profil parabolique nécessitent la mise en œuvre de procédés longs et onéreux.

Il existe également des fibres dont le profil d'indice de réfraction participe de l'une à l'autre des catégories précédentes. Ainsi, le brevet JP-A-5 512 948 décrit une fibre optique qui comporte un cœur d'indice de réfraction constant, entouré d'une première zone dont l'indice de réfraction diminue continûment selon une loi non précisée, le passage du cœur à cette zone s'effectuant par un saut d'indice.

La présente invention a pour objet des fibres optiques qui réunissent à la fois les avantages économiques conférés par les procédés de fabrication des fibres à saut d'indice, et les caractéristiques techniques des fibres à profil parabolique.

Pour parvenir à ce résultat, les fibres optiques de l'invention comportent l'ensemble des caractéristiques telles que mentionnées dans la revendication 1. Ces fibres comportent notamment un cœur cylindrique de rayon $a_0$ d'indice de réfraction constant, entouré d'une gaine cylindrique de rayon $a$, dont l'indice de réfraction diminue continûment selon une loi déterminée, le passage du cœur à la gaine s'effectuant par un saut d'indice positif ; les rayons du cœur et de la gaine, le saut d'indice et la variation continue de l'indice dans la gaine sont interdépendants et régis par des relations mathématiques.

La nature du profil d'indice de réfraction des fibres optiques selon l'invention et les avantages conférés par ledit profil sont exposés en détail ci-après en se référant aux figures jointes au présent mémoire, et selon lesquelles :

la figure 1 est une représentation schématique en coordonnées réelles du profil d'indice de réfraction d'une fibre selon l'invention,

la figure 2 est une représentation en coordonnées réduites du profil d'indice de réfraction d'une fibre selon l'invention,

la figure 3 est la représentation graphique de la relation qui lie le saut d'indice $\Delta n$ exprimé en coordonnées réduites soit $E_0$ et le rapport des rayons de l'âme et de la gaine,

les figures 4, 5 et 6 sont des représentations graphiques de la fonction de transfert en fonction de la fréquence, pour des fibres optiques selon l'invention de un kilomètre de longueur éclairées à l'entrée par une source lambertienne.

Les figures 7 et 8 représentent l'une en coordonnées réduites, l'autre en coordonnées réelles, le profil d'indice de réfraction d'une fibre selon l'exemple n° 1.

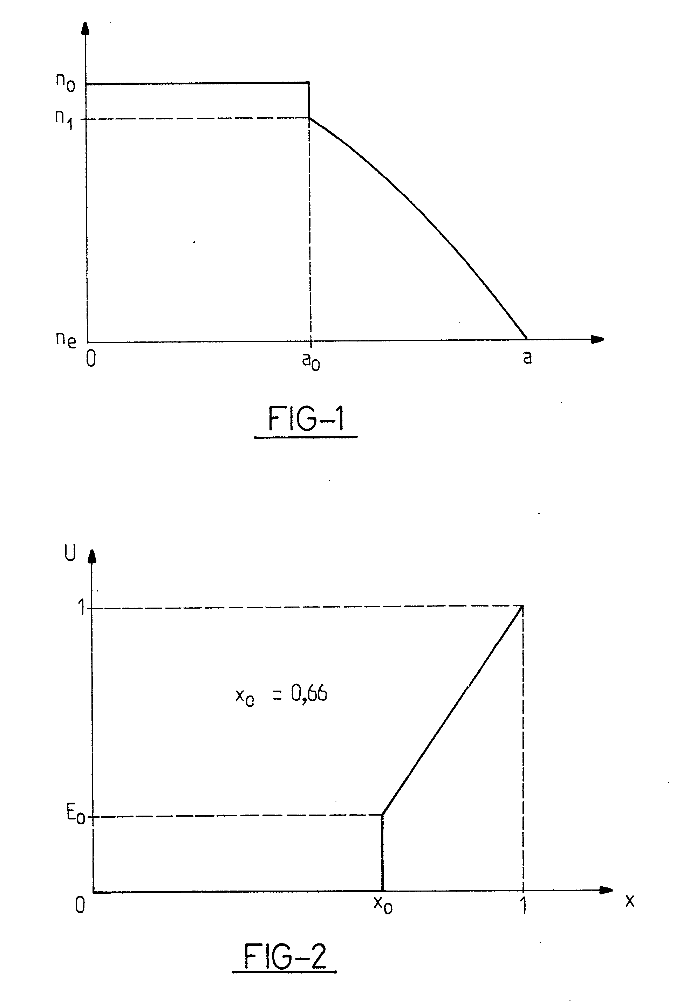

Selon le graphique représenté à la figure 1, qui montre en coordonnées réelles les variations de l'indice n de la fibre en fonction du rayon r, il apparaît, qu'en substance, les fibres optiques selon l'invention sont constituées d'une âme cylindrique de rayon $a_0$ présentant un indice de réfraction constant $n_0$, entourée par une gaine de rayon $a$ où l'indice de réfraction varie continûment de l'âme jusqu'à la périphérie d'une valeur $n_1$ à une valeur inférieure $n_e$. La transition entre l'âme et la gaine s'effectue par un saut d'indice $\Delta n = n_0 - n_1$ dont la valeur est fonction du rapport $a_0/a$.

Afin d'exposer la portée générale de l'invention il est utile de passer par l'intermédiaire de coordonnées réduites, tant pour exprimer les différentes relations qui définissent le profil d'indice de réfraction des fibres optiques selon l'invention, que pour en donner certaines représentations graphiques.

2

Ainsi dans la suite de la description on utilisera les notations réduites suivantes :
Les distances radiales, qui sont représentées en abscisses dans les graphiques, sont exprimées par :

$$x = \frac{r}{a}$$

x variant de 0 à 1.

Les variations d'indice de réfraction, représentées en ordonnées dans les graphiques, sont exprimées par :

$$U = \frac{n_0^2 - n^2}{n_0^2 - n_e^2}$$

$n_0$ = indice de réfraction de l'âme de la fibre,
$n_e$ = indice de réfraction à la périphérie de la gaine.
Dans ce système le saut d'indice de réfraction est symbolisé par $E_0$ et a lieu pour

$$x_0 = \frac{a_0}{a}.$$

La figure 2, utilisant ces notations, donne une autre représentation du profil d'indice de réfraction des fibres optiques selon l'invention.

Ce profil doit présenter un saut d'indice $E_0$ à l'interface cœur-gaine suivi d'une variation U continue dudit indice dans la gaine, tels qu'ils sont régis par des relations, fruits d'un calcul définissant les conditions à remplir pour qu'une fibre optique, dont le cœur est d'indice constant, présente une bande passante élevée ; ces relations sont les suivantes :

$$\frac{\pi}{x_0} = \frac{\pi}{2} + \text{Arc Sin} (2\,E_0 - 1) + 2\left(\frac{1 - E_0}{E_0}\right)^{1/2} \qquad (1)$$

$$x(U) = \frac{x_0}{\pi}\left[\text{Arc sin}\left(\frac{2\,E_0}{U} - 1\right) + \frac{\pi}{2} + 2\left(\frac{U - E_0}{E_0}\right)^{1/2}\right] \qquad (2)$$

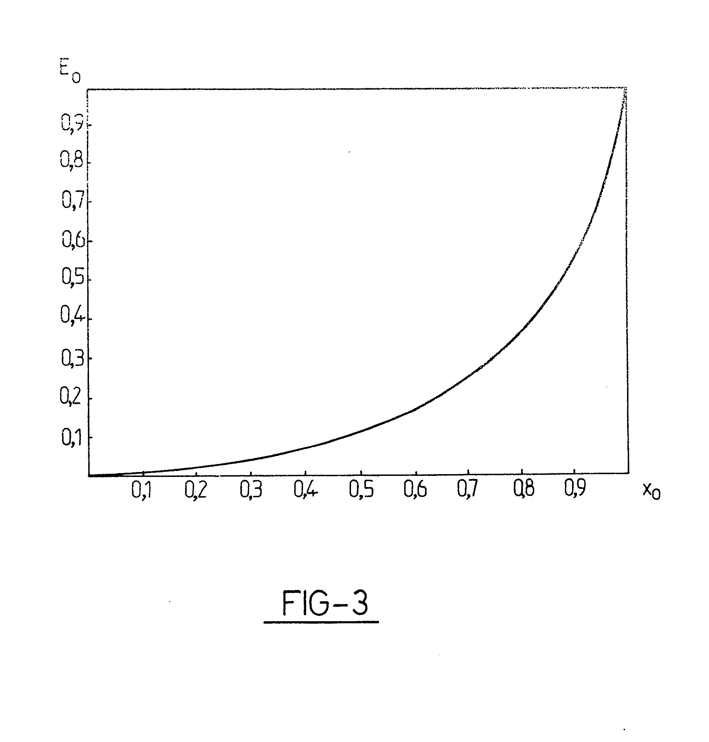

Sachant que pour $x < x_0$ U = 0 et pour $x = x_0$ U = $E_0$, la relation qui existe entre $E_0$ et $x_0$ est représentée graphiquement par la courbe de la figure 3.

Lorsque les relations (1) et (2) sont satisfaites, on démontre par le calcul, en se plaçant dans le cas d'une injection lambertienne des rayons lumineux à l'entrée d'une fibre d'un kilomètre de longueur, que le module de la fonction de transfert en fonction de la fréquence reste supérieur à 0,5 pour des valeurs de $x_0$ inférieures à 0,83.

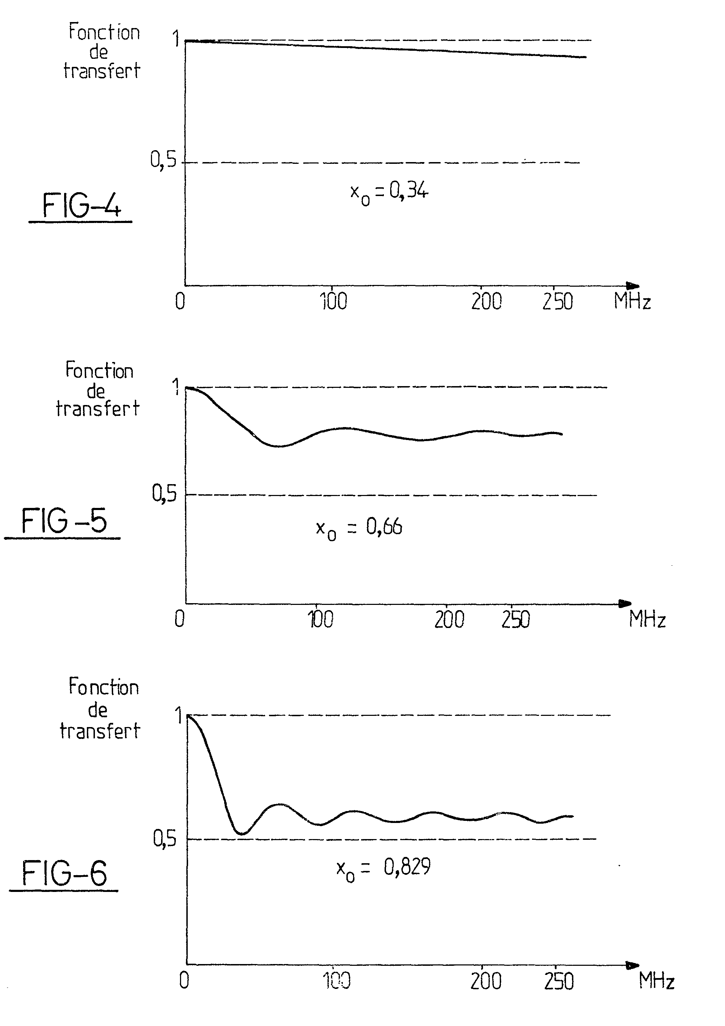

Cette variation de la fonction de transfert est représentée graphiquement pour trois valeurs de $x_0$ (figures 4, 5 et 6).

Dans les trois cas figurés on constate effectivement que la fonction de transfert reste supérieure à 0,5 quelle que soit la fréquence et donc, qu'en théorie, la bande passante est infinie.

Toutefois ces représentations montrent que la courbe se rapproche d'autant plus de la valeur critique de 0,5 que le rayon de l'âme augmente par rapport au rayon de la gaine. A cet égard le module de la fonction de transfert correspondant à $x_0$ = 0,829 constitue un exemple limite. Au-delà de cette valeur, les fibres optiques correspondantes présentent une bande passante, exprimée en MHz·km égale à la fréquence où la fonction de transfert est égale à 0,5 ; ainsi que le montre la figure 6 ceci se produit pour une fréquence égale ou inférieure à une trentaine de MHz·km.

Pour obtenir des fibres optiques dont la bande passante est élevée, il convient de respecter la condition suivante :

$$x_0 < 0,83 \qquad (3)$$

Dans la pratique, $x_0$ est compris de préférence entre 0,3 et 0,7.

La fabrication des fibres selon l'invention passe donc nécessairement par la définition de ses paramètres de structure.

Ainsi, après avoir choisi l'indice de réfraction de l'âme, $n_0$, celui de la périphérie de la gaine, $n_e$, et le rapport $x_0$, on procède aux calculs suivants :

Dans une première phase on détermine le profil d'indice de la fibre en coordonnées réduites. En appliquant la relation (1), ou en utilisant la courbe de la figure 3, on détermine le saut d'indice $E_0$ ; puis en appliquant la relation (2) on calcule point par point le profil d'indice de la gaine x(U).

Dans une deuxième phase on définit la fibre optique en valeurs réelles d'indice de réfraction et de rayon.

On calcule tout d'abord l'indice de réfraction $n_1$, définissant le saut d'indice, par la relation :

$$n_1^2 = n_0^2 - E_0(n_0^2 - n_e^2) \,. \tag{4}$$

Puis on calcule point par point le profil réel de l'indice n de la gaine grâce à la relation suivante :

$$n^2 = n_0^2 - U(n_0^2 - n_e^2) \,. \tag{5}$$

Les paramètres de structure étant ainsi définis, la fibre optique peut être fabriquée par tout procédé approprié connu de l'homme de l'art ainsi qu'il ressort des exemples donnés ci-après :

### Exemple n° 1

La fibre optique choisie est constituée d'un cœur en silice synthétique pure, d'indice de réfraction $n_0$ = 1,458 5, entouré d'une gaine en silice dopée au fluor dont l'indice de réfraction décroît jusqu'à sa périphérie pour atteindre la valeur $n_e$ = 1,453 0.

Le diamètre de la fibre sera de 200 $\mu$m et celui du cœur de 68,5 $\mu$m. On en déduit $x_0$ = 0,342 5.

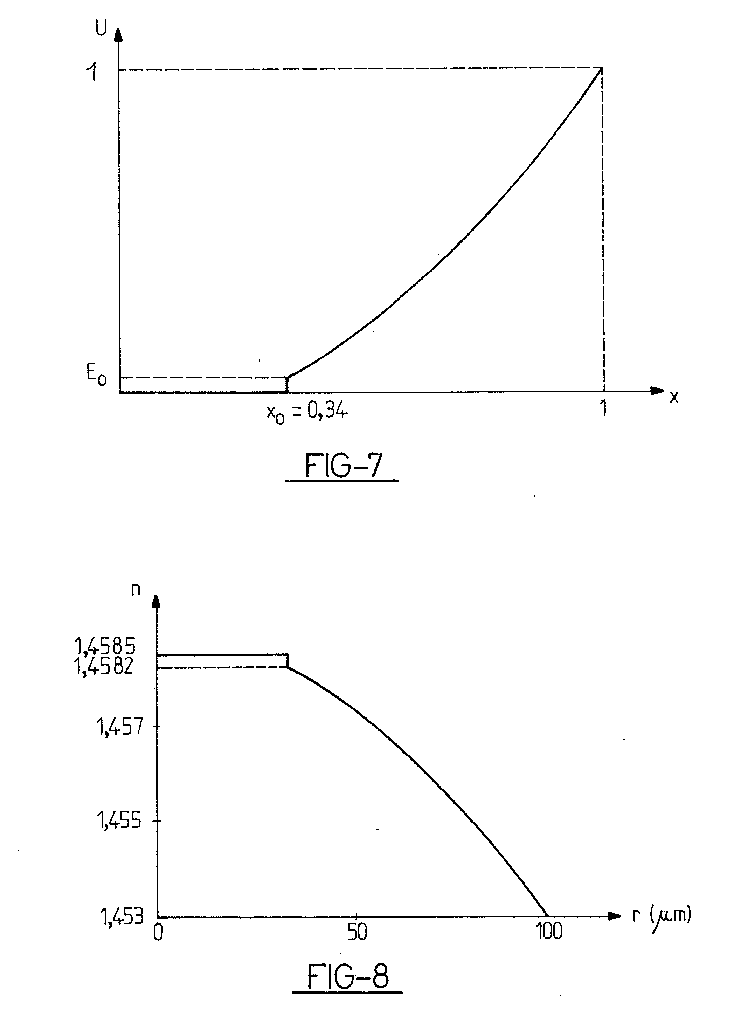

D'après la relation (1) on déduit $E_0$ = 0,05 et d'après la relation (2) on calcule la courbe x(U), par exemple pour x = 0,5, U = 0,208 6 et pour x = 0,9, U = 0,800 4. On obtient le profil d'indice de la fibre en coordonnées réduites ainsi que le représente la figure 7.

On détermine ensuite le profil réel d'indice de réfraction de la fibre en appliquant les relations (4) et (5). On déduit $n_1$ = 1,458 2 et la variation d'indice de la gaine, par exemple pour x = 0,5 ou r = 50 $\mu$m, n = 1,457 3 ; pour x = 0,9 ou r = 90 $\mu$m, n = 1,454 1. Ce profil réel est représenté à la figure 8.

La fibre ainsi définie est obtenue par étirage d'une préforme fabriquée selon un procédé de dépôt de vapeurs chimiques (CVD), tel que décrit ci-après :

On place un tube de verre de silice sur un tour verrier équipé d'un chalumeau oxhydrique ; ce tube, long de 1 500 mm, présente un diamètre externe de 18 mm et un diamètre interne de 15 mm.

Dans une première phase, on envoie dans ce tube un mélange gazeux de tétrachlorure de silicium, d'hexafluorure de soufre et d'oxygène. Le profil d'indice de réfraction de la gaine est réalisé en modifiant la teneur du mélange en hexafluorure de soufre au cours du dépôt, selon des méthodes connues de l'homme de l'art. L'épaisseur de la couche déposée à l'issue de cette première phase est de 1,04 mm.

Au cours d'une seconde phase on dépose une couche de silice pure, de 0,16 mm d'épaisseur, obtenue par réaction du mélange tétrachlorure de silicium-oxygène.

Le tube ainsi préparé est transformé par chauffage sous vide en une baguette pleine, de 12,85 mm de diamètre.

La couche externe de cette baguette, constituée par la paroi du tube initial, est éliminée par rectification puis attaque par l'acide fluorhydrique.

Après poli à la flamme on obtient une baguette, ou préforme, de 8,13 mm de diamètre, renfermant un cœur en silice pure de 2,83 mm.

La fibre optique étirée à partir de cette préforme est enfin revêtue d'une couche de protection selon les techniques connues.

A la longueur d'onde de 1 300 nanomètres, la fibre obtenue présente une atténuation de 2,5 dB/km et une bande passante supérieure à 1 GHz·km.

### Exemple n° 2

La fibre optique choisie est constituée d'un cœur en silice synthétique pure, d'indice de réfraction $n_0$ = 1,458 5, entouré d'une gaine en silice dopée au fluor dont l'indice de réfraction décroît jusqu'à sa périphérie pour atteindre la valeur $n_e$ = 1,443 9.

Le diamètre de la fibre sera de 160 $\mu$m et celui du cœur de 80 $\mu$m, soit $x_0$ = 0,5.

Comme dans l'exemple précédent on détermine l'indice $n_1$ = 1,456 9 et le profil d'indice de la gaine.

La fibre optique ainsi définie est obtenue par étirage d'une préforme fabriquée selon le procédé suivant :

Dans une première phase on fabrique un lingot de silice synthétique pure par dépôt axial de particules de silice sur une ébauche en rotation. Ces particules sont obtenues par injection d'un mélange gazeux de tétrachlorure de silicium et d'oxygène, dans la flamme d'un brûleur à plasma inductif. Après rectification et nettoyage superficiel à l'acide fluorhydrique dilué, on obtient un lingot cylindrique de 40 mm de diamètre et de 500 mm de long.

Dans une deuxième phase le lingot est monté sur un tour verrier et soumis à un mouvement de rotation et à un mouvement de va-et-vient transversal à la flamme du brûleur à plasma inductif. Dans ces conditions on effectue un dépôt latéral de silice dopée au fluor, grâce à la réaction dans la flamme du plasma d'un mélange de tétrachlorure de silicium, d'hexafluorure de soufre et d'oxygène. Le profil d'indice du revêtement latéral est obtenu en modifiant la teneur du mélange en hexafluorure de soufre.

Le procédé de fabrication appliqué dans cet exemple est notamment décrit dans la demande de brevet français publié sous le numéro 2 432 478.

La transformation à haute température du lingot en préforme dans un four à induction, puis l'étirage de ladite préforme conduisent à une fibre optique qui présente une atténuation inférieure à 3,5 dB/km et une bande passante supérieure à 700 MHz·km, pour la longueur d'onde de 820 nanomètres.

Le saut d'indice de réfraction $\Delta n = n_0 - n_1$ doit être effectué avec précision ; tout écart entre le $\Delta n$ théorique et le $\Delta n$ réel peut conduire à une diminution considérable de la bande passante ainsi que le montrent les essais suivants :

La fibre optique décrite dans l'exemple n° 2 doit présenter un saut d'indice $\Delta n = 0,001\,6$. A partir de cette référence ont été fabriquées d'autres fibres optiques qui présentent le même $x_0$ mais dont le $\Delta n$ est supérieur ou inférieur à 0,001 6.

L'influence des variations de $\Delta n$ sur la bande passante mesurée à 820 nanomètres est résumée dans le tableau ci-après :

Tableau I

| $\Delta n \times 10^4$ | B.P. (MHz) |
|---|---|
| 28 | 150 |
| 23 | 300 |
| 20 | 600 |
| 16 | > 700 |
| 12 | 600 |
| 9 | 300 |
| 4 | 150 |

Il ressort de ce tableau qu'une erreur relative de 25 % sur le saut d'indice diminue la valeur de la bande passante à 600 MHz, dans la configuration de la fibre proposée.

Il n'est évidemment pas possible de présenter les calculs complets pour toutes les fibres appartenant au domaine de l'invention. Toutefois, pour souligner l'importance de $\Delta n$ sur les caractéristiques des fibres, le tableau ci-après indique l'erreur relative à ne pas dépasser pour conférer aux fibres définies par $n_0 - n_e/n_0 = 1\,\%$ une bande passante au moins égale à 600 MHz·km.

Tableau II

| $x_0$ | erreur sur $\Delta n$ (%) |
|---|---|
| 0,20 | 47 |
| 0,30 | 38 |
| 0,40 | 31 |
| 0,50 | 25 |
| 0,60 | 19 |
| 0,70 | 14 |
| 0,80 | 9 |

A travers cette série d'exemples il ressort que le saut d'indice doit être d'autant mieux effectué que le rayon du cœur augmente par rapport au rayon de la gaine.

Bien entendu, la description qui précède n'est pas limitative et l'invention peut être mise en œuvre selon d'autres variantes, sans que l'on sorte de son cadre. En particulier le cœur de la fibre peut être constitué par une silice synthétique dopée par au moins un élément susceptible de modifier l'indice de réfraction de la silice pure.

# 0 085 585

## Revendications

1. Fibre optique comprenant un cœur en silice vitreuse, dopée ou non, de rayon $a_0$ et dont l'indice de réfraction $n_0$ est constant, entouré d'une gaine de silice vitreuse dopée de rayon a, où l'indice de réfraction varie continûment du cœur à la périphérie jusqu'à une valeur $n_e$, inférieure à $n_0$, le passage du cœur à la gaine s'effectuant par un saut d'indice $\Delta n = n_0 - n_1$, $n_1$ étant inférieur à $n_0$ et supérieur à $n_e$, caractérisée en ce que ledit saut d'indice $\Delta n$ est choisi en fonction desdits rayons $a_0$ et a de façon à obéir à la relation suivante :

$$\frac{\pi}{x_0} = \frac{\pi}{2} + \text{Arc sin}\,(2\,E_0 - 1) + 2\left(\frac{1 - E_0}{E_0}\right)\frac{1}{2}$$

en posant

$$x_0 = \frac{a_0}{a} \qquad et \qquad E_0 = \frac{n_0^2 - n_1^2}{n_0^2 - n_e^2} \simeq \frac{\Delta n}{n_0 - n_e},$$

lesdits rayons $a_0$ et a étant par ailleurs choisis de façon que $X_0$ soit inférieur à 0,83.

2. Fibre optique selon la revendication 1, caractérisée en ce que la variation de l'indice de réfraction de la gaine en fonction de la distance radiale r obéit à la relation suivante :

$$x(U) = \frac{x_0}{\pi}\left[\text{Arc sin}\left(\frac{2\,E_0}{U} - 1\right) + \frac{\pi}{2} + 2\left(\frac{U - E_0}{E_0}\right)\frac{1}{2}\right]$$

en posant

$$U = \frac{n_0^2 - n^2}{n_0^2 - n_e^2} \qquad et \qquad x = \frac{r}{a}.$$

3. Fibre optique selon l'une des revendications 1 et 2, caractérisée en ce que $x_0$ est compris de préférence entre 0,3 et 0,7.

4. Fibre optique selon l'une des revendications précédentes caractérisée en ce que le cœur de la fibre est en silice synthétique pure et que sa gaine est en silice synthétique dopée au fluor.

## Claims

1. An optical fibre comprising a core of doped or undoped vitreous silica, of radius $a_0$ and of which the refractive index $n_0$ is constant, surrounded by a sheath of doped vitreous silica of radius a, of which the refractive index n varies continuously from the core to the periphery to a value $n_e$, less than $n_0$, the refractive index altering on passage from the core to the sheath by a jump $\Delta n = n_0 - n_1$, $n_1$ being less than $n_0$ and greater than $n_e$, characterised in that said jump $\Delta n$ is selected as a function of said radii $a_0$ and a to obey the following relation :

$$\frac{\pi}{x_0} = \frac{\pi}{2} + \text{Arc sin}\,(2\,E_0 - 1) + 2\left(\frac{1 - E_0}{E_0}\right)\frac{1}{2}$$

wherein

$$x_0 = \frac{a_0}{a} \qquad and \qquad E_0 = \frac{n_0^2 - n_1^2}{n_0^2 - n_e^2} \simeq \frac{\Delta n}{n_0 - n_e},$$

said radii $a_0$ and a being selected such that $x_0$ is less than 0.83.

2. An optical fibre according to claim 1, characterised in that the variation of refractive index n in the sheath as a function of the radial distance r obeys the following relation :

$$x(U) = \frac{x_0}{\pi}\left[\text{Arc sin}\left(\frac{2\,E_0}{U} - 1\right) + \frac{\pi}{2} + 2\left(\frac{U - E_0}{E_0}\right)\frac{1}{2}\right]$$

wherein

$$U = \frac{n_0^2 - n^2}{n_0^2 - n_e^2} \qquad and \qquad x = \frac{r}{a}.$$

6

3. An optical fibre according to claim 1 or 2, characterised in that $x_0$ is preferably from 0.3 to 0.7.

4. An optical fibre according to any one of the preceding claims, characterised in that the core of the fibre is of pure synthetic silica and the sheath is of synthetic silica doped with fluorine.

**Patentansprüche**

1. Lichtleitfaser mit einem Kern aus dotiertem oder undotiertem Kieselsäureglas mit einem Radius $a_0$ und mit einem konstanten Brechungskoeffizienten $n_0$, der von einer Hülle aus dotiertem Kieselsäureglas mit einem Radius a umgeben ist, deren Brechungskoeffizient n kontinuierlich sich vom Kern zum Umfang bis auf einen Wert $n_e$ verändert, der kleiner als $n_0$ ist, wobei der Übergang vom Kern zur Hülle durch einen Sprung des Koeffizienten $\Delta n = n_0 - n_1$ bewirkt wird, mit $n_1$ kleiner als $n_0$ und größer als $n_e$, dadurch gekennzeichnet, daß der Sprung des Koeffizienten $\Delta n$ bestimmt ist in Abhängigkeit von den Radien $a_0$ und a gemäß folgender Gleichung :

$$\frac{\pi}{x_0} = \frac{\pi}{2} + \text{Arc sin} (2\,E_0 - 1) + 2 \left(\frac{1 - E_0}{E_0}\right)\frac{1}{2}$$

wobei $x_0$

$$x_0 = \frac{a_0}{a} \qquad \text{und} \qquad E_0 = \frac{n_0^2 - n_1^2}{n_0^2 - n_e^2} \simeq \frac{\Delta n}{n_0 - n_e},$$

und daß die Radien $a_0$ und a ferner derart bestimmt sind, daß $x_0$ kleiner als 0,83 ist.

2. Lichtleitfaser nach Anspruch 1, dadurch gekennzeichnet, daß die Veränderung des Brechungskoeffizienten n der Hülle in Abhängigkeit des radialen Abstandes sich nach folgender Formel ergibt :

$$x(U) = \frac{x_0}{\pi}\left[\text{Arc sin}\left(\frac{2\,E_0}{U} - 1\right) + \frac{\pi}{2} + 2\left(\frac{U - E_0}{E_0}\right)\frac{1}{2}\right]$$

wobei

$$U = \frac{n_0^2 - n^2}{n_0^2 - n_e^2} \qquad \text{und} \qquad x = \frac{r}{a}.$$

3. Lichtleitfasern nach Anspruch 1 oder 2, dadurch gekennzeichnet, daß $x_0$ vorzugsweise zwischen 0,3 und 0,7 beträgt.

4. Lichtleitfasern nach einem der vorhergehenden Ansprüche, dadurch gekennzeichnet, daß der Kern der Faser aus reinem Kieselsäurekunstglas und die Hülle aus mit Fluor dotiertem Kieselsäurekunstglas gebildet ist.

FIG-1

$x_0 = 0,66$

FIG-2

1

FIG-3

0 085 585

Fonction de transfert

$x_0 = 0,34$

FIG-4

Fonction de transfert

$x_0 = 0,66$

FIG-5

Fonction de transfert

$x_0 = 0,829$

FIG-6

3

FIG-7

FIG-8